# FASCICULE DE BREVET EUROPEEN

(11) **EP 2 483 566 B1**
(45) Date de publication et mention de la délivrance du brevet: **13.12.2017**
(21) Numéro de dépôt: 10814737.2
(22) Date de dépôt: 28.09.2010
(51) Int. Cl.: F04D 29/32

(54) **HELICE, DISPOSITIF DE REFROIDISSEMENT MOTEUR COMPRENANT UNE TELLE HELICE ET MOULE DE FABRICATION DE LADITE HELICE**
LÜFTERRAD, MOTORKÜHLVORRICHTUNG MIT EINEM SOLCHEN LÜFTERRAD, HERSTELLUNGSPROZESS UND -GIESSFORM FÜR DIESES LÜFTERRAD
IMPELLER, ENGINE COOLING APPARATUS COMPRISING SUCH AN IMPELLER, MANUFACTURING PROCESS AND MOULD FOR SAID IMPELLER

(30) Priorité: 29.09.2009 FR 0904651
(43) Date de publication de la demande: 08.08.2012
(73) Titulaire: Valeo Systèmes Thermiques, 78320 Le Mesnil-Saint-Denis (FR)
(72) Inventeur: TURCAS, Sylvain, 35500 Montreuil sous Pérouse (FR)
(74) Mandataire: Neuviale, Bertrand
(86) Numéro de dépôt international: PCT/EP2010/064344
(87) Numéro de publication internationale: WO 2011/039173

(56) Documents cités:
- WO-A1-2009/107278
- DE-A1- 19 847 632
- FR-A1- 2 789 449
- JP-A- 7 205 241
- JP-A- 8 224 762
- US-A- 4 396 351
- US-A1- 2002 106 473
- US-A1- 2006 067 820
- US-A1- 2007 104 581

## Description

La présente invention concerne une hélice, notamment une hélice de refroidissement moteur et un moule apte à être utilisé pour fabriquer une telle hélice.

### ARRIERE PLAN DE L'INVENTION

Il est connu d'utiliser des hélices pour créer des écoulements d'air vers des échangeurs pour faire baisser la température de moteurs exothermiques, tels que des moteurs de véhicules automobiles ou autres engins de locomotion.

De manière connue, une hélice de ce type est composée d'un moyeu central, appelé également bol, autour duquel sont répartis régulièrement des éléments de forme vrillée appelés communément pales. Le moyeu est destiné à être calé sur l'arbre d'un moteur. Les extrémités extérieures des pales sont généralement reliées entre elles par un élément concentrique au moyeu, appelé communément jante ou virole, dont la fonction est de procurer à l'ensemble de l'hélice une bonne rigidité structurelle et d'assurer le maintien relatif des différentes pales. On trouvera des exemples de ces hélices, par exemple, dans la demande de brevet WO-2007/107489 A1, qui propose un nouveau profilé de pale afin d'en améliorer les performances aérauliques et acoustiques. Par ailleurs, le document DE 198 47 632 A1 divulgue une hélice conforme au préambule de la revendication 1. Dans la pratique, ces hélices présentent une structure pleine monobloc en matériau polymère éventuellement renforcé, et sont fabriquées par un procédé d'injection. Ce procédé consiste, de façon schématique, à injecter la matière polymère à l'état visqueux dans un moule, généralement par un ou plusieurs points d'injection situés au niveau du moyeu, la matière remplissant le moule en s'écoulant dans le moule depuis la zone du moule correspondant au moyeu vers la zone correspondant à la virole par les zones correspondant aux pales. De fait, il se crée au niveau de la virole des zones dites de recollement où deux flux de matière antagonistes, provenant de deux zones de moule correspondant à deux pales adjacentes, se rencontrent. Ces zones de recollement sont généralement de résistance mécanique plus faible que le reste de l'hélice, car le mélange des deux flux dans ces zones n'est jamais parfaitement homogène et intime, de part les différences de température entre les deux fronts de matière et les différences d'orientation des fibres du matériau de renfort dans le cas où la matière polymère est renforcée par un renfort fibreux. Ces deux flux ont des directions de déplacement antagonistes, et ces zones ont tendance à être le siège de regroupement de bulles de gaz ou d'impuretés dans les lignes d'interface les délimitant, bulles ou impuretés plus difficiles à évacuer par des évents dans ces zones qu'ailleurs dans le moule. Concrètement, quand l'hélice vieillit ou qu'elle est soumise à des efforts mécaniques importants et répétés, il y a un risque accru qu'elle casse spécifiquement au niveau d'une de ces zones de recollement de moindre résistance mécanique.

### OBJET DE L'INVENTION

L'invention a pour objet une hélice dont la conception vise à minimiser les inconvénients précités. Elle vise ainsi une hélice de conception améliorée, plus résistante mécaniquement. Plus spécifiquement, elle vise une hélice dont la virole est plus résistante mécaniquement, notamment au niveau de ses zones de recollement.

### DEFINITION GENERALE DE L'INVENTION

L'invention a pour objet une hélice comprenant un moyeu, des pales, et une virole comportant deux flancs reliés par un coude, les pales s'étendant à partir du moyeu jusqu'à la virole.

Le problème précité est résolu conformément à l'invention grâce à l'épaisseur d'au moins une portion d'au moins un des flancs de la virole qui diminue en direction de l'extrémité libre dudit flanc.

En effet, il s'est avéré que ce choix de dimensionnement influait de façon très bénéfique la cohésion des zones de recollement se trouvant au niveau de la virole, ce qui, de facto, entraînait une amélioration de la résistance mécanique de l'hélice dans ces zones connues jusque-là comme étant des zones plus fragiles mécaniquement que le reste de l'hélice. En diminuant l'épaisseur de l'un des flancs de la virole au moins, conformément à l'invention, on modifie la vitesse des flux de matière dans le moule en direction de l'extrémité libre du flanc, et les deux flux antagonistes se rencontrent avec une vitesse d'autant plus faible qu'on se rapproche de l'extrémité libre du flanc de la virole. De fait, on va obtenir une zone de recollement de forme différente, ayant des bords divergents en direction de l'extrémité libre du flanc. Et il s'est avéré que cette forme différente conduisait à une résistance mécanique significativement améliorée dans ces zones, conduisant à un risque de casse dans ces zones significativement plus faible qu'auparavant. Des bords divergents faciliteraient l'évacuation des bulles et impuretés le long de des lignes d'interface de forme sensiblement en V, en direction des évents, et que ces bords divergents favoriseraient également le mélange entre les deux flux, augmentant ainsi la résistance à la casse par rapport à des lignes d'interface sensiblement parallèles et frontales.

L'invention a ainsi pu mettre en évidence que l'on pouvait modifier le profil des zones de recollement en modifiant la vitesse d'écoulement de la matière dans ces zones. On peut envisager, de manière non limitative, deux façons de modifier cette vitesse : on peut choisir de modifier la section de passage, notamment dans le sens de l'épaisseur, du moule au niveau d'au moins un des flancs de la virole en direction de son extrémité libre, ce qui a pour effet de ralentir d'autant la progression des flux de matière dans cette direction. On peut aussi (cumulativement à l'option précédente) modifier le profil de température des parois du moule au niveau de ces zones de recollement, en imposant une température plus faible dans les zones où l'on souhaite diminuer la vitesse d'écoulement des flux.

L'invention a également pour objet un moule d'injection d'une hélice comprenant un moyeu, des pales, et une virole comprenant deux flancs reliés par un coude, les pales s'étendant du moyeu jusqu'à la virole, le moule comprenant une zone correspondant au moyeu, une zone correspondant à chacune des pales et une zone correspondant à la virole, la zone correspondant à la virole présentant une diminution de la section de passage dans le sens de l'épaisseur d'au moins un des flancs de la virole en direction de son extrémité libre. Le ralentissement des flux de matière dû à ce rétrécissement dans l'épaisseur du ou des flancs de la virole permet une amélioration de la cohésion des zones de recollement, et, de fait, d'améliorer leur résistance mécanique.

L'invention a également pour objet tout dispositif de refroidissement moteur comprenant au moins une hélice telle que précédemment décrite.

### BREVE DESCRIPTION DES DESSINS

D'autres caractéristiques et avantages de l'invention apparaîtront plus clairement à la lumière de la description qui va suivre et des dessins annexés, concernant deux modes de réalisation particuliers non limitatifs, en référence aux dessins annexés où :
- la figure 1 représente une vue en perspective d'une hélice selon l'art antérieur ;
- la figure 2a représente une section transversale d'une virole appartenant à une hélice selon l'art antérieur, la figure 2b représentant la formation d'une zone de recollement au niveau de la virole selon l'art antérieur ;
- les figures 3a et 3b représentent une section transversale d'une virole appartenant à une hélice selon un premier mode de réalisation, selon une première variante (figure 3a) et selon une seconde variante (figure 3b) de ce mode de réalisation ;
- la figure 4 représente une section transversale d'une virole appartenant à une hélice selon un second mode de réalisation selon l'invention ;
- la figure 5 représente un agrandissement d'une virole de l'art antérieur selon la figure 2, faisant figurer la zone dite de recollement obtenue quand l'hélice est fabriquée par moulage par injection ;
- les figures 6a, 6b représentent des agrandissements d'une portion de virole conforme à l'invention selon la figure 3a à différents stades lors du moulage, faisant figurer l'évolution de la forme de la zone dite de recollement de façon analogue à la figure 5 ;
- les figures 7a, 7b représentent des agrandissements d'une virole conforme à l'invention selon la figure 4 à différents stades lors du moulage, faisant figurer l'évolution de la forme de la zone dite de recollement de façon analogue aux figures 6a,6b.

L'ensemble des figures est très schématique et ne respecte pas nécessairement l'échelle pour en faciliter la lecture, chaque élément représenté conservant la même référence dans l'ensemble des figures.

### DESCRIPTION DE MODES DE REALISATION DE L'INVENTION

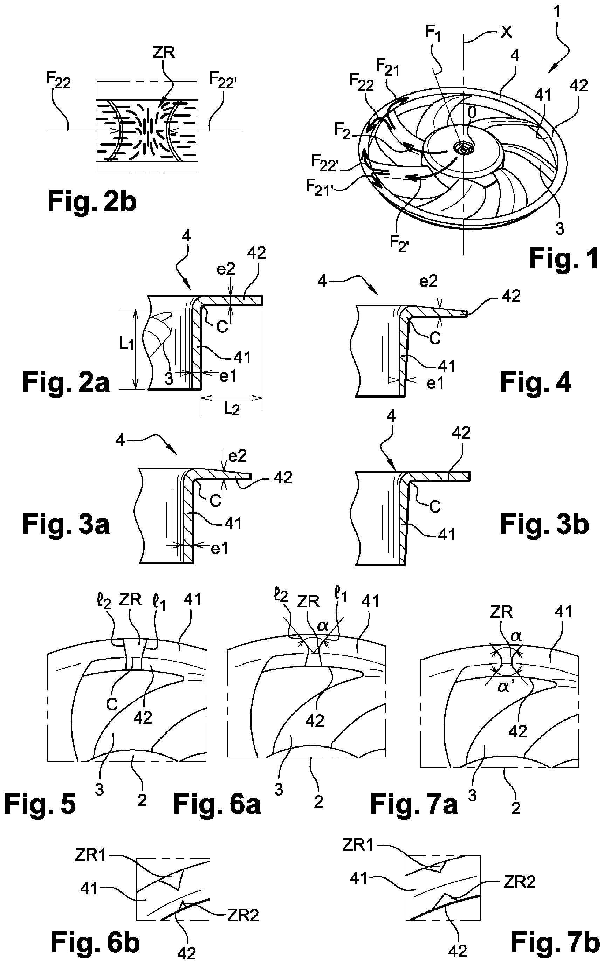

La figure 1 représente une hélice 1 selon l'art antérieur, comportant, de façon connue, un moyeu 2 d'axe central X, une pluralité de pales 3 dont une extrémité est reliée au moyeu et l'autre extrémité à une virole 4. La virole comprend un premier flanc 41, qui est substantiellement de forme cylindrique et coaxial à l'axe X du moyeu 2, et qui délimite la face sur laquelle accostent les extrémités des pales 3. La virole 4 comprend un second flanc 42 s'étendant radialement par rapport à l'axe X du moyeu 2 à partir d'un des bords du premier flanc 41, les deux flancs étant reliés par un coude C.

La figure 2a montre une section de la virole 4, avec ses deux flancs 41 et 42 d'épaisseurs e1 et e2 constantes et sensiblement identiques.

L'hélice est obtenue par un procédé d'injection dans un moule d'une matière à base de polymère de viscosité appropriée. Ici, il s'agit d'un polymère appartenant à la famille des polyamides, renforcé par des fibres de verre. On ne rentrera pas ici dans le détail du procédé par injection, procédé bien connu en soi. Alternativement, d'autres polymères peuvent être utilisés, notamment un polymère de la famille des polypropylènes.

Comme représenté symboliquement (flèche F1) en figure 1, la matière est injectée dans un moule au niveau du moyeu 2, puis s'écoule (flèches F2) du moyeu 2 vers les pales 3. A l'autre extrémité des pales, le flux de matière, schématiquement, se sépare en deux flux de matière dans des directions opposées au niveau de la virole 4 (flèches F21, F21', F22, F22'). Comme également représenté en figure 2b, les flux antagonistes (flèches F22, F'22) provenant de deux pales adjacentes 3 se rencontrent donc au niveau de la virole 4, dans la partie séparant celles-ci. On définit alors une zone dite de recollement ZR, qui se remplit progressivement de matière par la rencontre des matières des deux flux de matière antagonistes qui viennent se mêler frontalement.

On comprend de l'ensemble des figures 5 à 7 que les zones dites de recollement telles que représentées sont des zones du moule dépourvues de matière où les deux flux vont se rencontrer pour combler ce vide.

Dans la pièce en cours de moulage, comme représenté en figure 5, on a donc au niveau de la virole 4 une zone de recollement ZR dans l'épaisseur de la virole sur ses deux flancs 41, 42, zone délimitée par deux lignes 11, 12 d'interface qui sont les lignes des deux fronts de matière allant à la rencontre l'un de l'autre au fur et à mesure du remplissage du moule. On voit ici que ces lignes sont parallèles ou quasiment parallèles entre elles, ce qui n'est pas favorable mécaniquement quand l'hélice tourne à haute vitesse et est soumise à des efforts de type cisaillement ou torsion sollicitant la virole dans ces zones de recollement ZR.

Naturellement, la zone de recollement représentée à la figure 5 (et dans les figures suivantes) peut ici se distinguer relativement bien à l'oeil nu, en extrayant les pièces incomplètes du moule avant que la pièce ne soit terminée. La trace de cette zone de recollement peut aussi se voir à l'oeil nu sur la pièce terminée, sous forme d'une ligne d'interface. De façon générale, la trace de la zone de recollement dans la pièce terminée est plus visible quand les deux fronts de matière sont sensiblement parallèles, comme c'est le cas de la virole selon la figure 5, et un peu moins ou nettement moins visible, quand les deux fronts de matière ne sont pas parallèles, comme c'est le cas des viroles selon les figures 6 et 7.

S'il arrive que l'hélice casse au niveau de la virole 4, ce sera dans le cas le plus général au niveau de la trace, dans l'hélice terminée, d'une de ces zones de recollement ZR, selon une surface de casse nette.

La présente invention consiste, toutes choses égales par ailleurs, à modifier cette hélice selon l'art antérieur en diminuant l'épaisseur d'au moins un des flancs 41, 42 de la virole 4 en direction de son extrémité libre.

Selon un premier mode de réalisation, et comme représenté aux figures 3a et 3b, seul l'un des flancs de la virole 4 a son épaisseur qui diminue depuis le coude jusqu'à son extrémité libre. Dans le cas de la figure 3a, selon une première variante, c'est le flanc 42, celui qui s'étend radialement. Dans le cas de la figure 3b, selon une seconde variante, c'est le flanc 41, celui sur lequel accostent les pales 3.

Selon un second mode de réalisation, et comme représenté à la figure 4, l'épaisseur e1, e2 des deux flancs 41, 42 de la virole 4 diminue en direction de l'extrémité libre de chacun des flancs.

Dans les deux modes de réalisation tels que représentés, la diminution d'épaisseur dans la virole est progressive : les épaisseurs e1 et/ou e2 diminuent progressivement du coude C jusqu'à l'extrémité libre du flanc 41, 42 considéré. Selon l'invention, l'épaisseur e1 et/ou e2 de l'un ou des deux flancs 41, 42 diminue sur une portion seulement du flanc en question, notamment au voisinage du coude C et au moins dans la première moitié de la longueur L1, L2 du flanc en question, et cette épaisseur est sensiblement constante sur une autre portion du flanc, au voisinage de l'extrémité libre du flanc en question. Il est en effet recommandé d'éviter que l'extrémité de chacun des flancs ne soit trop mince, ne serait-ce que pour des questions pratiques de réalisation de moule.

On peut, par exemple, choisir, au voisinage des coudes, des épaisseurs e1, e2 un peu plus élevées, notamment de 10, 20% ou 30%, que les épaisseurs utilisées dans les hélices selon l'art antérieur, et choisir un taux d'amincissement tel qu'en final le bilan matière soit sensiblement celui d'une hélice selon l'art antérieur. On peut ainsi garder à l'hélice un poids substantiellement inchangé.

Alternativement, la diminution d'épaisseur peut être non progressive, par pallier.

La figure 6a représente la zone de recollement ZR correspondant à la variante selon la figure 3a à un premier stade du moulage: on voit que la zone de recollement (vide de matière donc) présente, sur le flanc 42 qui a été aminci, des bords divergents vers l'extrémité libre du flanc 42. L'angle α entre les deux lignes d'interface, qui, selon l'art antérieur étaient sensiblement parallèles, est ici d'environ 90°. La figure 6b représente la même zone de recollement à un second stade du moulage, elle est naturellement moins étendue que dans le cas de la figure 6a, avec en fait deux zones distinctes ZR1,ZR2 ne se rejoignant plus en surface au niveau du coude C, et on conserve encore sur le flanc 42 une zone de recollement ZR2 avec des bords divergents.

La figure 7a représente la zone de recollement ZR correspondant à la variante selon la figure 4 à un premier stade du moulage. On voit que la zone de recollement présente des bords divergents sur chacun des flancs 41, 42, avec un angle α entre les lignes d'interface 11, 12 d'environ 90° sur chacun des flancs 41, 42. La figure 7b représente la même zone de recollement à un second stade du moulage: comme dans le cas de la figure 6b, on a alors une zone de recollement en deux parties ZR1, ZR2 qui ne se rejoignent plus au niveau du coude, et qui, comme à la figure 7a, ont des bords divergents (angles α, α' entre les deux lignes d'interface de chacune des zones de recollement) sur chacun des flancs 41, 42.

L'hélice selon l'invention est monobloc. Elle est obtenue par moulage par injection, et présente donc avantageusement au niveau de la virole entre chaque pale des zones de recollement présentant au moins localement des bords divergents.

La diminution d'épaisseur dans la virole selon l'invention est avantageusement d'au moins 30% entre l'épaisseur de la virole au niveau du coude et l'épaisseur de la virole au niveau du bord libre. On comprend par cela que, dans la portion du flanc dont l'épaisseur diminue, l'épaisseur minimale est au moins 30% moins élevée que l'épaisseur maximale. Il a été observé que plus l'amincissement est important, plus les bords de la zone de recollement seront divergents, avec bien sur des limitations en termes de procédé et de réalisation de moules, qui font que la diminution d'épaisseur est généralement limitée, notamment à environ 50%, et d'au plus 60 ou 70%.

Dans ces exemples de réalisation conformes à l'invention, on a donc modulé la vitesse d'écoulement de la matière injectée dans la zone du moule correspondant à la virole en diminuant la section de passage du flux de matière injectée dans le sens de l'épaisseur d'au moins un des flancs de la virole en direction de son extrémité libre.

L'invention n'est pas limitée aux modes de réalisation qui viennent d'être décrits, mais englobe au contraire toute variante couverte par l'objet des revendications indépendantes ci-jointes (1 et 8). L'invention s'applique à tout type d'hélice à virole, dont celles obtenues par bi injection et composées de plusieurs polymères (éventuellement renforcés) différents.

Elle s'applique également aux hélices comportant une armature sur laquelle le corps de l'hélice est surmoulé. Elle s'applique également à des hélices dont la virole a des formes différentes de celles illustrées précédemment, ayant notamment des flancs ayant des épaisseurs, des longueurs, des formes, des inclinaisons relatives, différentes.

## Revendications

1. Hélice (1) moulée comprenant un moyeu (2), des pales (3), et une virole (4) comportant deux flancs (41,42) reliés par un coude, les pales (3) s'étendant à partir du moyeu (2) jusqu'à la virole (4), l'épaisseur (e1,e2) d'au moins une portion d'au moins un des flancs (41,42) de la virole (4) diminuant en direction de l'extrémité libre dudit flanc,
l'hélice étant **caractérisée en ce que**
l'épaisseur de l'un ou des deux flancs (41, 42) diminue sur une portion seulement du flanc en question, au voisinage du coude et au moins dans la première moitié de la longueur du flanc (41, 42) en question, et **en ce que** cette épaisseur est sensiblement constante sur une autre portion dudit flanc (41, 42), au voisinage de l'extrémité libre du flanc (41, 42) en question.

2. Hélice (1) selon la revendication précédente, **caractérisée en ce que** l'épaisseur (e1,e2) des deux flancs (41,42) de la virole (4) diminue en direction de l'extrémité libre de chacun des flancs.

3. Hélice (1) selon l'une des revendications précédentes, **caractérisée en ce que** la virole (4) comprend un premier flanc (41) substantiellement cylindrique, coaxial à l'axe (X) du moyeu (2) et délimitant la face sur laquelle accostent les extrémités des pales (3), et **en ce que** le deuxième flanc (42) s'étend radialement à partir d'un des bords dudit premier flanc (41).

4. Hélice (1) selon l'une des revendications précédentes, **caractérisée en ce qu'**elle est monobloc.

5. Hélice (1) selon l'une des revendications précédentes, **caractérisée en ce que** la diminution d'épaisseur (e1, e2) dans la virole (4) est progressive.

6. Hélice (1) selon l'une des revendications précédentes, **caractérisée en ce que** la diminution d'épaisseur (e1, e2) dans la virole (4) est d'au moins 30%, notamment d'environ 50%, entre l'épaisseur de la virole au niveau du coude et l'épaisseur de la virole au niveau du bord libre.

7. Dispositif de refroidissement moteur, **caractérisé en ce qu'**il comprend au moins une hélice (1) selon l'une des revendications précédentes.

8. Moule d'injection d'une hélice (1) selon l'une des revendications 1 à 7, l'hélice comprenant un moyeu (2), des pales (3), et une virole (4) comprenant deux flancs (41, 42) reliés par un coude, les pales (3) s'étendant du moyeu (2) jusqu'à la virole (4), le moule comprenant une zone correspondant au moyeu (2), une zone correspondant à chacune des pales (3) et une zone correspondant à la virole (4), la zone correspondant à la virole (4) présentant une diminution de la section de passage dans le sens de l'épaisseur d'au moins un des flancs (41,42) de la virole (4) en direction de son extrémité libre,
le moule étant **caractérisé en ce que**
ladite section de passage diminue sur une portion seulement du flanc en question, au voisinage du coude et au moins dans la première moitié de la longueur du flanc en question, et **en ce que** ladite section de passage est sensiblement constante sur une autre portion dudit flanc, au voisinage de l'extrémité libre du flanc en question.

## Patentansprüche

1. Geformtes Lüfterrad (1), umfassend eine Nabe (2), Schaufeln (3) und einen Ring (4), umfassend zwei Flanken (41, 42), die durch eine Krümmung verbunden sind, wobei sich die Schaufeln (3) von der Nabe (2) bis zum Ring (4) erstrecken,
wobei die Dicke (e1, e2) mindestens eines Abschnitts mindestens einer der Flanken (41, 42) des Rings (4) in Richtung des freien Endes der Flanke abnimmt,
wobei das Lüfterrad **dadurch gekennzeichnet ist, dass** die Dicke einer oder beider Flanken (41, 42) über einen Abschnitt nur der betreffenden Flanke in der Nähe der Krümmung und mindestens in der ersten Hälfte der Länge der betreffenden Flanke (41, 42) abnimmt, und dadurch, dass diese Dicke über einen anderen Abschnitt der Flanke (41, 42) in der Nähe des freien Endes der betreffenden Flanke (41, 42) im Wesentlichen konstant ist.

2. Lüfterrad (1) nach dem vorhergehenden Anspruch, **dadurch gekennzeichnet, dass** die Dicke (e1, e2) der beiden Flanken (41, 42) des Rings (4) in Richtung des freien Endes jeder der Flanken abnimmt.

3. Lüfterrad (1) nach einem der vorhergehenden Ansprüche, **dadurch gekennzeichnet, dass** der Ring (4) eine erste Flanke (41) umfasst, die im Wesentlichen zylindrisch ist, mit der Achse (X) der Nabe (2) koaxial ist und die Fläche begrenzt, auf der die Enden der Schaufeln (3) anliegen, und dadurch, dass sich die zweite Flanke (42) radial von einem der Ränder der ersten Flanke (41) erstreckt.

4. Lüfterrad (1) nach einem der vorhergehenden Ansprüche, **dadurch gekennzeichnet, dass** dieses einteilig ist.

5. Lüfterrad (1) nach einem der vorhergehenden Ansprüche, **dadurch gekennzeichnet, dass** die Abnahme der Dicke (e1, e2) im Ring (4) progressiv ist.

6. Lüfterrad (1) nach einem der vorhergehenden Ansprüche, **dadurch gekennzeichnet, dass** die Abnahme der Dicke (e1, e2) im Ring (4) mindestens 30 %, insbesondere ungefähr 50 %, zwischen der Dicke des Rings auf der Höhe der Krümmung und der Dicke des Rings auf der Ebene des freien Rands beträgt.

7. Motorkühlvorrichtung, **dadurch gekennzeichnet, dass** diese mindestens ein Lüfterrad (1) nach einem der vorhergehenden Ansprüche umfasst.

8. Gießform eines Lüfterrads (1) nach einem der Ansprüche 1 bis 7, wobei das Lüfterrad eine Nabe (2), Schaufeln (3) und einen Ring (4), umfassend zwei Flanken (41, 42), die durch eine Krümmung verbunden sind, umfasst, wobei sich die Schaufeln (3) von der Nabe (2) bis zum Ring (4) erstrecken, wobei die Form eine Zone, die der Nabe (2) entspricht, eine Zone, die jeder der Schaufeln (3) entspricht, und eine Zone, die dem Ring (4) entspricht, umfasst, wobei die Zone, die dem Ring (4) entspricht, eine Abnahme des Durchgangsquerschnitts im Sinn der Dicke mindestens einer der Flanken (41, 42) des Rings (4) in Richtung ihres freien Endes aufweist,
wobei die Form **dadurch gekennzeichnet ist, dass** der Durchgangsquerschnitt über einen Abschnitt nur der betreffenden Flanke in der Nähe der Krümmung und mindestens in der ersten Hälfte der Länge der betreffenden Flanke abnimmt, und dadurch, dass der Durchgangsquerschnitt über einen anderen Abschnitt der Flanke in der Nähe des freien Endes der betreffenden Flanke im Wesentlichen konstant ist.

## Claims

1. Molded propeller (1) comprising a hub (2), blades (3) and a shell (4) having two flanks (41, 42) connected by an elbow piece, the blades (3) extending from the hub (2) to the shell (4), the thickness (e1, e2) of at least one part of at least one of the flanks (41, 42) of the shell (4) being reduced toward the free end of said flank, the propeller being **characterized in that** the thickness of one or both flanks (41, 42) is reduced over one portion only of the flank in question, in the vicinity of the elbow piece and at least in the first half of the length of the flank (41, 42) in question and **in that** this thickness is substantially uniform over a further portion of said flank (41, 42), in the vicinity of the free end of the flank (41, 42) in question.

2. Propeller (1) according to the preceding claim, **characterized in that** the thickness (e1, e2) of the two flanks (41, 42) of the shell (4) is reduced toward the free end of each of the flanks.

3. Propeller (1) according to one of the preceding claims, **characterized in that** the shell (4) comprises a substantially cylindrical first flank (41), coaxial with the axis (X) of the hub (2) and defining the face with which the ends of the blades (3) come into contact, and **in that** the second flank (42) extends radially from one of the edges of said first flank (41).

4. Propeller (1) according to one of the preceding claims, **characterized in that** the propeller is in one piece.

5. Propeller (1) according to one of the preceding claims, **characterized in that** the reduction in thickness (e1, e2) in the shell (4) is gradual.

6. Propeller (1) according to one of the preceding claims, **characterized in that** the reduction in thickness (e1, e2) in the shell (4) is at least 30%, in particular approximately 50% between the thickness of the shell in the region of the elbow piece and the thickness of the shell in the region of the free edge.

7. Engine cooling device, **characterized in that** it comprises at least one propeller (1) according to one of the preceding claims.

8. Injection mold of a propeller (1) according to one of Claims 1 to 7, the propeller comprising a hub (2), blades (3) and a shell (4) having two flanks (41, 42) connected by an elbow piece, the blades (3) extending from the hub (2) to the shell (4), the mold comprising an area corresponding to the hub (2), an area corresponding to each of the blades (3) and an area corresponding to the shell (4), the area corresponding to the shell (4) having a reduction in the passage cross section in the thickness direction of at least one of the flanks (41, 42) of the shell (4) toward its free end, the mold being **characterized in that** said passage cross section is reduced over one portion only of the flank in question, in the vicinity of the elbow piece and at least in the first half of the length of the flank in question and **in that** said passage cross section is substantially uniform over a further portion of said flank, in the vicinity of the free end of the flank in question.
